# EUROPÄISCHE PATENTSCHRIFT

(11) **EP 2 057 041 B1**
(45) Veröffentlichungstag und Bekanntmachung des Hinweises auf die Patenterteilung: **28.08.2013**
(21) Anmeldenummer: 07818704.4
(22) Anmeldetag: 04.10.2007
(51) Int. Cl.: F16F 7/12, B60R 19/34

(54) **ENERGIEABSORPTIONSVORRICHTUNG, INSBESONDERE FÜR NICHTAXIALE BELASTUNG**
ENERGY ABSORPTION DEVICE, ESPECIALLY FOR NON-AXIAL LOADS
DISPOSITIF D'ABSORPTION D'ENERGIE, EN PARTICULIER POUR UNE CHARGE NON AXIALE

(30) Priorität: 12.10.2006 DE 102006048429
(43) Veröffentlichungstag der Anmeldung: 13.05.2009
(73) Patentinhaber: Magna Automotive Services GmbH, 63877 Sailauf (DE)
(72) Erfinder: FANG, Xiangfan, 50676 Köln (DE); SEPER, Christoph, A-2770 Gutenstein (AT)
(74) Vertreter: Grünecker, Kinkeldey, Stockmair & Schwanhäusser
(86) Internationale Anmeldenummer: PCT/EP2007/008625
(87) Internationale Veröffentlichungsnummer: WO 2008/043480

(56) Entgegenhaltungen:
- EP-A- 1 533 192
- WO-A-2006/036065
- DE-A1- 4 312 507
- DE-A1- 10 359 483
- FR-A- 2 867 731
- GB-A- 2 341 149

## Beschreibung

Die vorliegende Erfindung betrifft eine Energieabsorptionsvorrichtung, welche zum Absorbieren von Energie durch Verformen zwischen einer Tragstruktur eines Fahrzeugs und einem Stoßfänger angeordnet ist.

Energieabsorptionsvorrichtungen dienen dazu, bei einem Unfall möglichst viel Energie zu absorbieren, bevor sich die Karosserie des Fahrzeugs plastisch verformt. Bei leichten Unfällen kann das Energieabsorptionsvermögen einer Energieabsorptionsvorrichtungen ausreichen, um ein plastisches Verformen der Karosserie ganz zu vermeiden. Hierdurch bleiben die Reparaturkosten gering, da nur der Stoßfänger und die Energieabsorptionsvorrichtung ausgetauscht werden müssen. Die DE 43 12 507 A1 schlägt sogar eine reversible Energieabsorptionsvorrichtung vor. Ein im Längsträger angeordneter Pralldämpfer wird bei einem leichten Aufprall ausgelenkt und sorgt so für eine lediglich elastische Verformung.

Für eine gute Energieabsorption ist es optimal, wenn die Energieabsorptionsvorrichtungen als Verlängerung von Längsträgern einer Bodengruppe des Fahrzeugs ausgebildet sind und sich der Stoßfänger, insbesondere sein Querträger, horizontal auf der Höhe der Energieabsorptionsvorrichtung befindet. So werden die Kräfte gerade in die Energieabsorptionsvorrichtung eingeleitet, wodurch ihre gesamte Länge gut zum Verformen, das heißt Absorbieren von Energie, genutzt werden kann. Die DE 103 59 483 A1 offenbart eine gattungsgemäße Energieabsorptionsvorrichtung.

Die Fahrzeughersteller sind bestrebt, möglichst viele Fahrzeugvarianten auf den Markt zu bringen. Um die Kosten möglichst gering zu halten, werden die verschiedenen Fahrzeugvarianten auf einer Bodengruppe aufgebaut. Werden Geländelimousinen, auch Sports Utility Vehicle SUV genannt, auf einer PKW-Bodengruppe aufgebaut, liegt die Bodengruppe höher als beim PKW. Gemäß den gesetzlichen Anforderungen muss sich jedoch der Stoßfänger, insbesondere sein Querträger, auf der Höhe befinden, die normalerweise einem PKW-Stoßfänger entspricht. Das heißt es ist ein vertikaler Versatz zwischen Stoßfänger, insbesondere seinem Querträger, und Längsträger der Bodengruppe zu überbrücken.

Es ist eine Möglichkeit, die Energieabsorptionsvorrichtung wie bisher als Längsverlängerung des Längsträgers der Bodengruppe auszubilden, jedoch einen Stoßfänger mit einem sich über den gesamten vertikalen Bereich erstreckenden und massiv ausgeführten Querträger vorzusehen. Auf diese Weise können die Kräfte gut in die Energieabsorptionsvorrichtung eingeleitet und von dieser absorbiert werden.

Es ist auch bekannt, gattungsgemäße Energieabsorptionsvorrichtungen zu verwenden und mit ihnen den Versatz zwischen dem Stoßfänger, gegebenenfalls einem Querträger hiervon, und dem Längsträger der Bodengruppe zu überbrücken. So können kompaktere und leichtere Stoßfänger, insbesondere kompaktere und leichtere Querträger, verwendet werden, was der Gewichtsersparnis zugute kommt. Tests haben jedoch gezeigt, dass Unfallkräfte nicht gerade genug durch diese Energieabsorptionsvorrichtungen geleitet werden, was zu einer schlechten Energieabsorption führt.

Der vorliegenden Erfindung liegt die Aufgabe zugrunde, eine gattungsgemäße Energieabsorptionsvorrichtung auf möglichst einfache Weise dahingehend zu verbessern, dass Energie gut abbaubar ist, trotzdem Kräfte schräg in die Energieabsorptionsvorrichtung eingeleitet werden.

Die Aufgabe wird erfindungsgemäß gelöst mit einer Energieabsorptionsvorrichtung mit den Merkmalen des Anspruches 1.

Das Zusatzprofil stabilisiert das Hauptprofil der Energieabsorptionsvorrichtung und wirkt insbesondere einem ungewollten Knicken der Energieabsorptionsvorrichtung entgegen. Auf diese Weise bleibt die Energieabsorptionsvorrichtung trotz schräg oder sogar quer eingeleiteter Kräfte für das Absorbieren und Durchleiten von Kräften stabil. Das heißt trotz der schräg eingeleiteten Kräfte wird eine gute Effizienz der Energieabsorption erreicht. Insbesondere bei einem Versatz zwischen Tragstruktur und Stoßfänger sind kompakte und leichte Stoßfänger einsetzbar. Werden Stoßfänger mit Querträger realisiert, kann der Querträger leicht und kompakt ausgebildet werden.

Da der Stoßfänger zur Tragstruktur versetzt angeordnet ist und die Energieabsorptionsvorrichtung den Versatz überbrückt, stabilisiert das Zusatzprofil vorteilhafterweise einen Querschnittsabschnitt des Hauptprofils, welcher in Versatzrichtung voraus angeordnet ist. Auf diese Weise wird ein Querschnittsabschnitt des Hauptprofils stabilisiert, welcher besonders für ein Einknicken gefährdet ist.

Da der Stoßfänger zur Tragstruktur versetzt angeordnet ist und die Energieabsorptionsvorrichtung den Versatz überbrückt, weist das Zusatzprofil bezüglich einer Längsrichtung der Tragstruktur eine Neigung auf, welche zur Richtung des Versatzes entgegengesetzt ist. Dadurch können vom Stoßfänger her eingeleitete Kräfte trotz des Versatzes mit stärkerem Anteil parallel zur Längsrichtung der Tragstruktur durch die Energieabsorptionsvorrichtung geleitet werden.

Bevorzugterweise kann der Querschnittsabschnitt ein bezüglich des Fahrzeugs unterer Querschnittsabschnitt des Hauptprofils sein. Hierdurch wird einem Herunterschwenken des Stoßfängers beim Unfall entgegengewirkt und die Kräfte werden gut absorbiert.

Vorzugsweise kann das Zusatzprofil einen bezüglich des Fahrzeugs etwa horizontal seitlichen Querschnittsabschnitt des Hauptprofils stabilisieren. Damit wird ein Querschnittsabschnitt des Hauptprofils stabilisieren, welcher in Richtung einer Querkomponente einer Unfallkraft voraus angeordnet ist, d.h. es wird ein Querschnittsabschnitt des Hauptprofils stabilisiert, welcher durch die Querkomponente der Unfallkraft für ein Einknicken gefährdet ist. So kann auch bei einem schrägen Frontalaufprall mit der Energieabsorptionsvorrichtung effizient Energie absorbiert werden.

Besonders günstig kann der seitliche Querschnittsabschnitt ein bezüglich einer Längsmittelrichtung des Fahrzeuges äußerer Querschnittsabschnitt sein. Dieser wirkt bei Unfallkräften, welche den Stoßfänger in die genannte Außenrichtung drängen, besonders gut stabilisierend.

Besonders vorteilhaft kann das Zusatzprofil einen im Wesentlichen gewölbten Querschnitt haben. Dies verleiht ihm eine gute Steifigkeit gegen ungewolltes Einknicken.

Besonders günstig kann der Querschnitt des Zusatzprofils mit einem Bereich des Querschnitts des Hauptprofils eine im Wesentlichen konvexe Kontur ausbilden. Damit haben das Zusatzprofil und der Bereich des Querschnitts des Hauptprofils eine gute Steifigkeit gegen Einknicken und ergänzen sich gegenseitig.

Vorteilhafterweise kann der Querschnitt des Zusatzprofils Abkantungen aufweisen. Die Abkantungen wirken stabilisierend gegen ein ungewolltes Einknicken.

Bevorzugterweise kann das Zusatzprofil im Innern des Hauptprofils angeordnet sein. So ist die Energieabsorptionsvorrichtung raumsparend ausbildbar und hat dennoch eine gute Stabilität und ein gutes Energieabsorptionsvermögen.

Vorzugsweise kann sich das Zusatzprofil in Richtung zu der Tragstruktur des Fahrzeugs verjüngen. So ist die Energieabsorptionsvorrichtung auf Seiten des Stoßfängers stärker gegen ein ungewolltes Knicken in Versatzrichtung stabilisiert als auf Seiten der Tragstruktur des Fahrzeugs.

Besonders vorteilhaft kann sich die Höhe des Querschnitts des Zusatzprofils in Richtung zu der Tragstruktur des Fahrzeugs verringern. Auf diese Weise hat das Zusatzprofil in Richtung seiner Höhe auf Seiten des Stoßfängers eine größere stabilisierende Wirkung gegen ungewolltes Einknicken als auf Seiten der Tragstruktur des Fahrzeugs.

Günstigerweise kann sich das Zusatzprofil in Richtung zu dem Stoßfänger verjüngen. Hierdurch ist die Energieabsorptionsvorrichtung auf Seiten der Tragstruktur stärker gegen ein ungewolltes Knicken in Richtung der Querkomponente der Unfallkraft stabilisiert als auf Seiten des Stoßfängers.

Bevorzugterweise kann sich die Höhe des Querschnitts des Zusatzprofils in Richtung zum Stoßfänger verringern. Damit hat das Zusatzprofil in Richtung seiner Höhe auf Seiten der Tragstruktur eine größere stabilisierende Wirkung gegen ungewolltes Einknicken als auf Seiten des Stoßfängers.

Wenn der Stoßfänger zur Tragstruktur versetzt angeordnet ist und die Energieabsorptionsvorrichtung den Versatz überbrückt, kann das Zusatzprofil bevorzugterweise einen Profilrücken aufweisen, welcher bezüglich der Längsrichtung der Tragstruktur entgegengesetzt zur Richtung des Versatzes geneigt ist. Hierdurch können Kräfte winklig durch den Profilrücken geleitet werden und die Winkligkeit von Kräften, die durch das Hauptprofil geleitet werden, wenigstens anteilig kompensieren. Dadurch ist die Summe der durch die Energieabsorptionsvorrichtung geleiteten Kräfte in ihrer Richtung besser an die Längsrichtung der Tragstruktur angenähert.

Besonders vorteilhaft kann das Zusatzprofil bezüglich einer Längsrichtung der Tragstruktur horizontal seitlich geneigt sein. Damit ist das Zusatzprofil zu einer Querkomponente einer zu erwartenden Unfallkraft korrespondierend geneigt und wirkt bezüglich der Querkomponente besonders gut stabilisierend gegen ungewolltes Einknicken.

Besonders günstig kann das Zusatzprofil einen Profilrücken aufweisen, welcher bezüglich einer Längsrichtung der Tragstruktur horizontal seitlich geneigt ist. Auf diese Weise ist der Profilrücken zu einer Querkomponente einer zu erwartenden Unfallkraft korrespondierend geneigt und bringt bezüglich der Querkomponente einen guten Stabilisierungsanteil gegen ungewolltes Einknicken auf.

Vorteilhafterweise können wenigstens zwei im Abstand zueinander verlaufende Zusatzprofile vorgesehen sein. Mit einer Mehrzahl von Zusatzprofilen ist die Energieabsorptionsvorrichtung noch besser gegen ein ungewolltes Einknicken stabilisiert. Durch den Abstand zwischen den Zusatzprofilen können sich diese behinderungsfrei verformen.

Besonders bevorzugt kann das Zusatzprofil in einem tragstrukturseitigen Bereich über eine größere Länge an dem Hauptprofil befestigt sein als in einem stoßfängerseitigen Bereich. Die kürzere Befestigungslänge im stoßfängerseitigen Bereich erleichtert hier ein Verformen des Zusatzprofils und des Hauptprofils. Die größere Befestigungslänge im tragstrukturseitigen Bereich erhöht hier den Widerstand des Zusatzprofils und des Hauptprofils gegen ein Verformen. Die an der Tragstruktur anliegende Kraft kann im Wesentlichen auf einem konstanten Niveau gehalten werden.

Bevorzugt kann ein Übergangsbereich vorgesehen sein, in welchem das Zusatzprofil über eine kürzere Länge an dem Hauptprofil befestigt ist als im tragstrukturseitigen Bereich und über eine größere Länge als im stoßfängerseitigen Bereich. Im Übergangsbereich haben das Zusatzprofil und das Hauptprofil insgesamt gesehen einen mittleren Widerstand gegen Verformen, verglichen mit dem tragstrukturseitigen und dem stoßfängerseitigen Bereich. Dies trägt dazu bei, die an der Tragstruktur anliegende Kraft gut auf einem konstanten Niveau zu halten.

Vorteilhafterweise kann das Zusatzprofil im tragstrukturseitigen Bereich etwa über 30% bis 45% seiner Länge am Hauptprofil befestigt sein, vorzugsweise über etwa 40% seiner Länge. Hierdurch haben das Zusatzprofil und das Hauptprofil in einem guten Bereich einen erhöhten Widerstand gegen Verformen, das heißt einen guten Bereich, welcher sich erst bei höheren Kräften verformt.

Besonders bevorzugt kann das Zusatzprofil im stoßfängerseitigen Bereich etwa über 3% bis 10% seiner Länge am Hauptprofil befestigt sein, vorzugsweise über etwa 5% seiner Länge. Damit haben das Zusatzprofil und das Hauptprofil einen guten Bereich, in welchem der Widerstand gegen ein Verformen geringer ist, das heißt welcher bei geringeren Kräften bereits Energie absorbiert, da sich Zusatzprofil und Hauptprofil in einem guten Bereich frei falten können.

Vorteilhafterweise kann das Zusatzprofil im Übergangsbereich über etwa 5% bis 15% seiner Länge am Hauptprofil befestigt sein, vorzugsweise über etwa 10% seiner Länge. Damit haben das Zusatzprofil und das Hauptprofil insgesamt gesehen einen guten Bereich mittleren Widerstandes gegen Verformen, das heißt einen guten Bereich welcher erst zu einem späteren Zeitpunkt Energie absorbiert.

Günstigerweise kann das Zusatzprofil tragstrukturseitig eine größere Materialstärke haben als stoßfängerseitig. Somit hat das Zusatzprofil tragstrukturseitig einen höheren Widerstand gegen Verformen als stoßfängerseitig.

Vorzugsweise kann das Zusatzprofil wenigstens zwei Materialstücke unterschiedlicher Materialstärke aufweisen. Hierdurch hat das Zusatzprofil bei jedem Materialstück einen anderen Widerstand gegen Verformen.

Vorteilhafterweise kann das Zusatzprofil ein Materialstück aufweisen, das eine durch Walzen variierte Materialstärke aufweist. So kann das Vorsehen der Bereiche unterschiedlicher Materialstärke für viele Werkstücke in einem effizienten Prozess erfolgen.

Günstigerweise kann das Material des Zusatzprofils tragstrukturseitig eine höhere Festigkeit haben als stoßfängerseitig. Damit hat das Zusatzprofil stoßfängerseitig einen geringeren Widerstand gegen Verformen als tragstrukturseitig.

Besonders zweckmäßig kann das Zusatzprofil wenigstens eine sich in seiner Längsrichtung erstreckende Längssicke aufweisen, vorzugsweise im Bereich nahe der Tragstruktur. Im Bereich der Längssicke hat das Zusatzprofil einen höheren Widerstand gegen ein Verformen in seiner Längsrichtung.

Besonders bevorzugt kann das Zusatzprofil wenigstens eine sich quer zu seiner Längsrichtung erstreckenden Quersicke aufweisen, vorzugsweise im Bereich nahe des Stoßfängers. Im Bereich der Quersicke ist das Zusatzprofil leichter in seiner Längsrichtung faltbar. Dabei definiert die Quersicke einen Bereich für gewolltes faltendes Verformen, wobei die Energieabsorptionsvorrichtung als Ganzes gegen ungewolltes Knicken stabilisiert bleibt.

Wenn der Stoßfänger zur Tragstruktur versetzt angeordnet ist und die Energieabsorptionsvorrichtung den Versatz überbrückt, kann ein erster Querschnittsabschnitt des Hauptprofils, welcher in Versatzrichtung voraus angeordnet ist, bevorzugterweise einen höheren Verformungswiderstand haben als ein zweiter Querschnittsabschnitt des Hauptprofils, welcher in Versatzrichtung dem ersten Querschnittsabschnitt nachgeordnet ist. Auf diese Weise ist ein Querschnittsabschnitt des Hauptprofils stabilisiert, welcher durch den baulichen Versatz für ein Einknicken gefährdet ist.

Vorteilhafterweise kann ein erster Querschnittsabschnitt des Hauptprofils, welcher sich bezüglich des Fahrzeugs auf einer ersten horizontalen Seite der Energieabsorptionsvorrichtung befindet, einen höheren Verformungswiderstand haben als ein zweiter Querschnittsabschnitt des Hauptprofils, welcher sich bezüglich des Fahrzeugs auf einer zweiten horizontalen Seite der Energieabsorptionsvorrichtung befindet. Hierdurch ist der in Richtung einer Querkomponente einer Unfallkraft der vorangehende Querschnittsabschnitt des Hauptprofils gegen ungewolltes Einknicken stabilisiert.

Bevorzugt kann der erste Querschnittsabschnitt eine größere Materialstärke haben als der zweite Querschnittsabschnitt. Dadurch hat der erste Querschnittsabschnitt einen höheren Widerstand gegen Verformen als der zweite Querschnittsabschnitt.

Günstigerweise kann das Material des ersten Querschnittsabschnittes eine höhere Festigkeit haben als das Material des zweiten Querschnittsabschnittes. Damit hat der zweite Querschnittsabschnitt einen geringeren Widerstand gegen Verformen als der erste Querschnittsabschnitt.

Vorteilhafterweise können am ersten Querschnittsabschnitt mehr Abkantungen vorgesehen sein als am zweiten Querschnittsabschnitt. Hierdurch hat der erste Querschnittsabschnitt einen höheren Widerstand gegen Verformen als der zweite Querschnittsabschnitt.

Besonders vorteilhaft können das Hauptprofil und das Zwischenprofil aus blechartigem Material und/oder blechartigen Profilen hergestellt sein. Auf diese Weise ist die Energieabsorptionsvorrichtung mit geringem Gewicht und mit hoher Gestaltungsfreiheit ausbildbar.

Eine Ausführungsform der Erfindung ist in der Zeichnung gezeigt und wird nachfolgend beschrieben. Es zeigen:
- Figur 1: eine perspektivische Ansicht von Energieabsorptionsvorrichtungen einer ersten Ausführungsform der Erfindung zwischen einem Querträger eines Stoßfängers und Tragstrukturen eines Fahrzeugs,
- Figur 2: eine perspektivische Darstellung einer der erfindungsgemäßen Energieabsorptionsvorrichtungen aus Figur 1,
- Figur 3: eine perspektivische Darstellung eines Teiles der Energieabsorptionsvorrichtung aus Figur 2,
- Figur 4: eine schematische Schnittansicht der Energieabsorptionsvorrichtung zwischen dem Stoßfänger und einer der Tragstrukturen gemäß der ersten Ausführungsform,
- Figur 5: eine schematische Schnittdarstellung mit alternativen Ausrichtungen eines Zusatzprofils der Energieabsorptionsvorrichtung,
- Figur 6: im Wesentlichen eine Draufsicht auf den Teil der Energieabsorptionsvorrichtung aus Figur 3,
- Figur 7: zeigt abschnittsweise und einzeln zwei Querschnittsabschnitte eines Hauptprofils und ein Zusatzprofil der Energieabsorptionsvorrichtung,
- Figur 8: ist eine Seitenansicht der Energieabsorptionsvorrichtung gemäß Figur 1,
- Figur 9: eine Schnittansicht der Energieabsorptionsvorrichtung gemäß einer Linie IX-IX in Figur 8,
- Figur 10: eine Schnittansicht der Energieabsorptionsvorrichtung gemäß einer Linie X-X in Figur 8,
- Figur 11: zeigt ein Kraft-Weg-Diagramm der Energieabsorptionsvorrichtung,
- Figur 12: eine perspektivische Ansicht von Energieabsorptionsvorrichtungen einer zweiten Ausführungsform der Erfindung zwischen einem Querträger eines Stoßfängers und Tragstrukturen eines Fahrzeugs,
- Figur 13: eine perspektivische Darstellung einer der erfindungsgemäßen Energieabsorptionsvorrichtung aus Figur 12,
- Figur 14: eine perspektivische Darstellung eines Teils der Energieabsorptionsvorrichtung aus Figur 13,
- Figur 15: eine Querschnittsansicht der Energieabsorptionsvorrichtung aus Figur 13,
- Figur 16: eine Querschnittsansicht einer alternativen Ausgestaltung des Querschnittsprofils der Energieabsorptionsvorrichtung,
- Figur 17: eine abschnittsweise Frontansicht der Anordnung aus Figur 12,
- Figur 18: eine schematische Schnittansicht der Energieabsorptionsvorrichtung zwischen dem Stoßfänger und einer der Tragstrukturen gemäß einer Linie XVIII-XVIII in Figur 17, und
- Figur 19: eine schematische Schnittansicht der Energieabsorptionsvorrichtung zwischen dem Stoßfänger und einer der Tragstrukturen gemäß einer Linie XIX-XIX in Figur 17.

In der nachfolgenden Beschreibung werden für analoge Elemente gleiche Bezugszeichen verwendet.

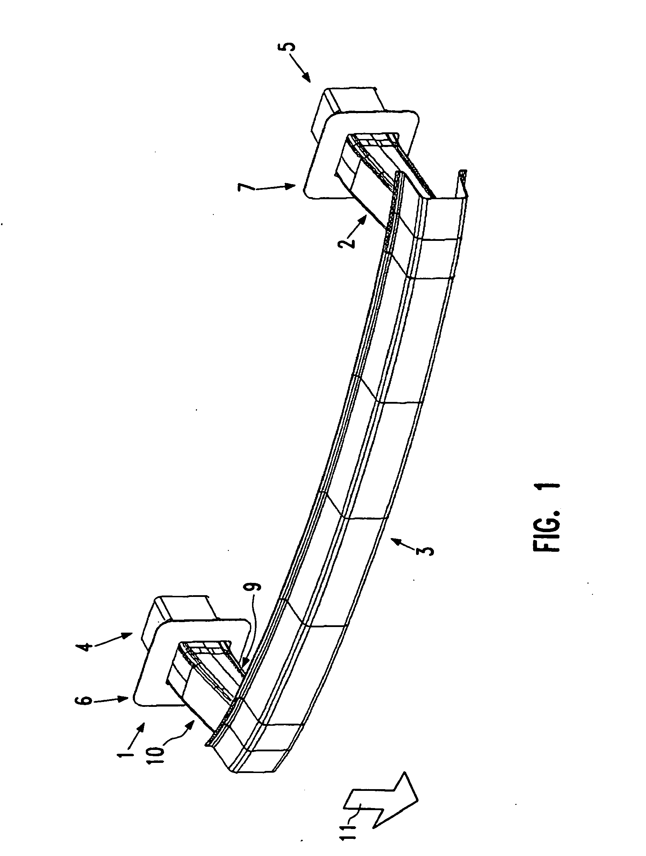

Die Figuren 1 bis 11 beziehen sich auf eine erste Ausführungsform der Erfindung.

Figur 1 zeigt abschnittsweise eine Karosserieanordnung eines Fahrzeugs. Die Karosserieanordnung weist Tragstrukturen 4, 5, daran angebrachte erfindungsgemäße Energieabsorptionsvorrichtungen und einen Stoßfänger auf, von welchem jedoch nur ein Querträger 3 gezeigt ist. Die Energieabsorptionsvorrichtungen sind symmetrisch zueinander aufgebaut und jeweils zwischen dem Stoßfänger, das heißt Querträger 3, und der jeweiligen Tragstruktur angeordnet. Der Querträger 3 verbindet die beiden Energieabsorptionsvorrichtungen 1, 2. Die Tragstrukturen 4, 5 sind in der vorliegenden Ausführungsform jeweils Längsträger einer Bodengruppe oder Plattform des Fahrzeugs.

Der Stoßfänger, das heißt der Querträger 3, ist zur jeweiligen Tragstruktur versetzt angeordnet. Die jeweilige Energieabsorptionsvorrichtung überbrückt den Versatz zwischen dem Querträger 3 und der jeweiligen Tragstruktur 4, 5. Die Energieabsorptionsvorrichtungen sind über einen jeweiligen Flansch 6, 7 an der betreffenden Tragstruktur 4, 5 befestigt, vorzugsweise lösbar.

In dieser Ausführungsform ist der Versatz vertikal. Ein horizontaler Versatz ist zusätzlich oder alternativ möglich.

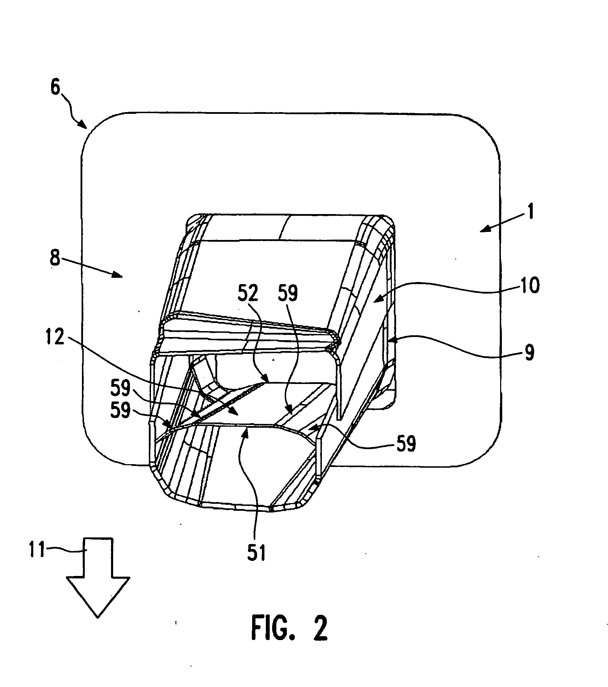

In Figur 2 ist die in Figur 1 linke Energieabsorptionsvorrichtung 1 in einer perspektivischen Ansicht gezeigt. Sie weist ein im Querschnitt hohlkörperartiges, verformbares Hauptprofil 8 auf, welches den Stoßfänger über den Querträger 3 trägt. Das Hauptprofil kann eine geschlossene oder offene hohlkörperartige Struktur haben.

Das Hauptprofil 8 weist einen ersten Querschnittsabschnitt 9 und einen zweiten Querschnittsabschnitt 10 auf. Der erste Querschnittsabschnitt 9 ist in Versatzrichtung 11 voraus angeordnet und der zweite Querschnittsabschnitt ist dem ersten Querschnittsabschnitt 9 in Versatzrichtung 11 nachgeordnet. In dieser Ausführungsform der Erfindung ist der erste Querschnittsabschnitt 9 ein bezüglich des Fahrzeugs unterer Querschnittsabschnitt und der zweite Querschnittsabschnitt 10 ist ein oberer Querschnittsabschnitt.

Die Querschnittsabschnitte sind in dieser Ausführungsform der Erfindung schalenartige Bauteile, welche durch Fügen, z. B. Schweißen, miteinander verbunden sind und einen gemeinsamen Innenraum haben. Es ist jedoch auch möglich, das Hauptprofilteil einstückig auszubilden.

Die Energieabsorptionsvorrichtung weist wenigstens ein verformbares, im Querschnitt des Hauptprofils 8 vorgesehenes Zusatzprofil 12 auf. Das Zusatzprofil 12 kann innerhalb oder außerhalb des Hauptprofils 8 angeordnet sein. Es erstreckt sich in Längsrichtung des Hauptprofils und stabilisiert es gegen ein ungewolltes Einknicken. So können trotz des Versatzes zwischen Tragstruktur und Querträger im Wesentlichen parallel zur Längsrichtung der Tragstruktur wirkende Unfallkräfte gut aufgenommen, absorbiert und in Richtung zur Tragstruktur weitergeleitet werden, wobei das Energieabsorptionsvermögen der Energieabsorptionsvorrichtung 1 gut ausgenutzt werden kann. Das Zusatzprofil ist schalenartig ausgebildet.

Die beiden Querschnittsabschnitte 9, 10 und das Zusatzprofil 12 sind aus blechartigem, umgeformten Material und/oder blechartigen Profilen hergestellt, die gegebenenfalls weiter umgeformt wurden.

Das Zusatzprofil 12 kann an dem ersten und/oder zweiten Querschnittsabschnitt 9, 10 angeordnet sein. In der vorliegenden Ausführungsform der Erfindung ist es am ersten Querschnittsabschnitt 9 angebracht und stabilisiert diesen gegen ein ungewolltes Einknicken.

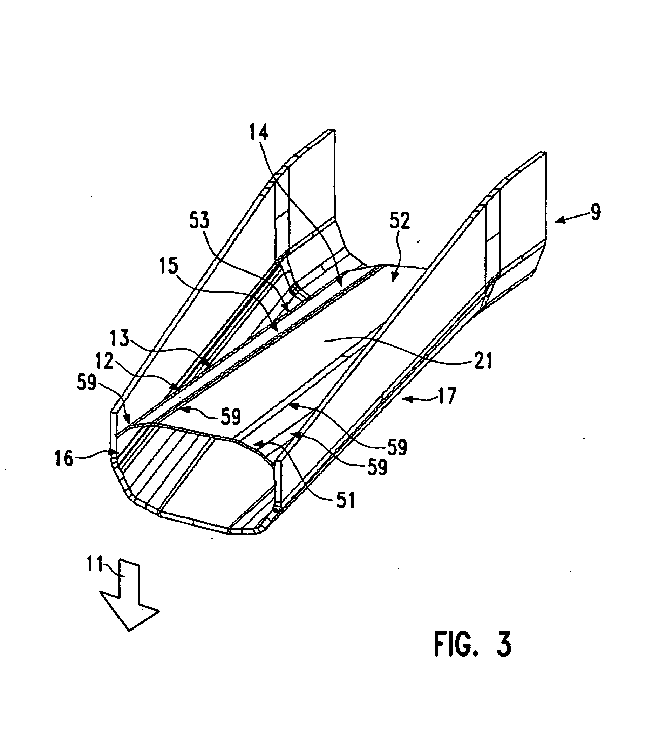

Wie in den Figuren 2 und 3 gezeigt ist, hat das Zusatzprofil einen im Wesentlichen gewölbten Querschnitt, welcher in dieser Ausführungsform der Erfindung etwa U- oder C-förmig ausgebildet ist. Dabei weist der Querschnitt des Zusatzprofils 12 Abkantungen 59 auf, wodurch es zusätzlich gegen ungewolltes Einknicken stabilisiert ist.

Das Zusatzprofil 12 bildet mit einem Bereich des Querschnitts eines des ersten und zweiten Querschnittsabschnitts 9, 10 eine im Wesentlichen konvexe Kontur aus, in dieser Ausführungsform mit einem Bereich des Querschnitts des ersten Querschnittabschnitts 9. Damit ergänzen sich die Steifigkeit des ersten Querschnittsabschnitts 9 und Zusatzprofils 12 gut.

Es ist genauso gut möglich, das Zusatzprofil 12 mit umgekehrt gewölbtem Querschnitt am ersten Querschnittsabschnitt anzubringen. Auch hier ergänzen sich die Steifigkeit des Zusatzprofiles und des ersten Querschnittsabschnitts 9 gegenseitig.

Das Zwischenprofil 12 erstreckt sich im Wesentlichen über die gesamte Länge des ersten Querschnittsabschnitts 9. Wie aus den Figuren 2 und 3 hervorgeht, ist das Zusatzprofil 12 bezüglich des Hauptprofils 8 geneigt angeordnet. Ein stoßfängerseitiges Ende 51 des Zwischenprofils 12 ist bezüglich der Versatzrichtung 11 etwa mittig in dem Hauptprofil 8 angeordnet. Ein tragstrukturseitiges Ende 52 des Zwischenprofils 12 ist bezüglich der Versatzrichtung 11 voraus in dem Hauptprofil 8 angeordnet. Dabei ist das stoßfängerseitige Ende 51 im Bereich einer Profilöffnung 16 des ersten Querschnittsabschnittes 9 angeordnet, das heißt in einem bezüglich der Versatzrichtung 11 rückwärtigen Bereich des ersten Querschnittsabschnitts 9. Das tragstrukturseitige Ende 52 ist im Bereich eines Profilbodens 17 des ersten Querschnittsabschnitts 9 angeordnet, das heißt in Versatzrichtung voraus.

Das Zusatzprofil 12 erstreckt sich zwischen dem stoßfängerseitigen Ende 51 und dem tragstrukturseitigen Ende 52 kontinuierlich. Ein diskontinuierlicher Verlauf, z. B. ein unterbrochener Verlauf, ist jedoch auch möglich.

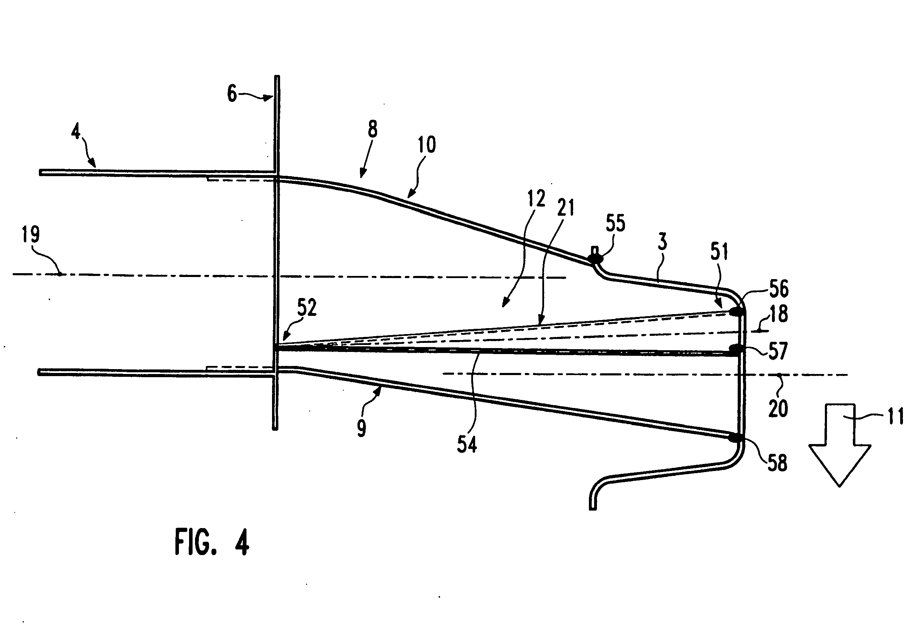

Wie weiter aus Figur 4 hervorgeht, hat das Zusatzprofil 12 bezüglich einer Längsrichtung der Tragstruktur 4 eine Neigung, welche zur Versatzrichtung 11 entgegengesetzt ist. Eine Längsmittellinie 18 des Zusatzprofils 12 verläuft in Richtung zu dem Querträger 3 hin zu einer Längsmittellinie 19 der Tragstruktur 4, das heißt schließt mit ihr bezüglich der Versatzrichtung 11 einen entsprechenden Winkel ein. In Richtung zu dem Querträger 3 verläuft die Längsmittellinie 18 des Zwischenprofils 12 von einer Mittellinie 20 des Querträgers 3 weg und schließt mit ihr bezüglich der Versatzrichtung 11 einen entsprechenden Winkel ein.

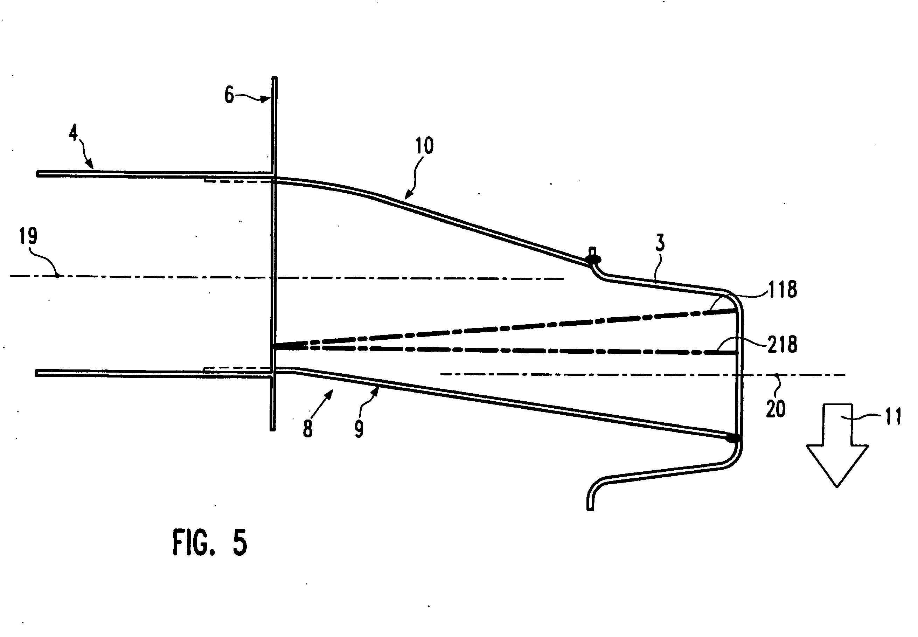

Es ist jedoch auch möglich, die Zwischenschale 12 parallel zur Längsrichtung der Tragstruktur und/oder des Querträgers auszurichten, das heißt die Längsmittellinie 18 des Zusatzprofils parallel zur Längsmittellinie 19 der Tragstruktur und/oder der Mittellinie 20 des Querträgers 3 verlaufend vorzusehen. Dies ist in Figur 5 mit Hilfe einer Längsmittellinie 218 für das Zusatzprofil veranschaulicht.

Genauso gut kan das Zusatzprofil mit einer stärkeren Neigung bezüglich der Längsrichtung der Tragstruktur 4 angeordnet sein. Dies ist in Figur 5 mit Hilfe einer Längsmittellinie 118 für das Zusatzprofil veranschaulicht.

Es wird wieder Bezug auf Figur 4 genommen. Das Zusatzprofil 12 weist einen Profilrücken 21 auf. Der Profilrücken 21 ist ebenfalls bezüglich der Längsrichtung der Tragstruktur 4 entgegengesetzt zur Versatzrichtung 11 geneigt. Er verläuft in Richtung zu dem Querträger 3 hin zur Längsmittellinie 19 der Tragstruktur 4. Dabei verläuft er stärker geneigt als die Längsmittellinie 18 des Zusatzprofils 12.

Das Zusatzprofil 12 weist Seitenkanten 53, 54 auf, von denen in Figur 4 eine gezeigt ist und welche in Versatzrichtung 11 vorausgehend angeordnet sind. Die gezeigte Seitenkante 54 verläuft bezüglich der Versatzrichtung etwa parallel zur Längsmittellinie der Tragstruktur 4 und der Mittellinie 20 des Querträgers 3.

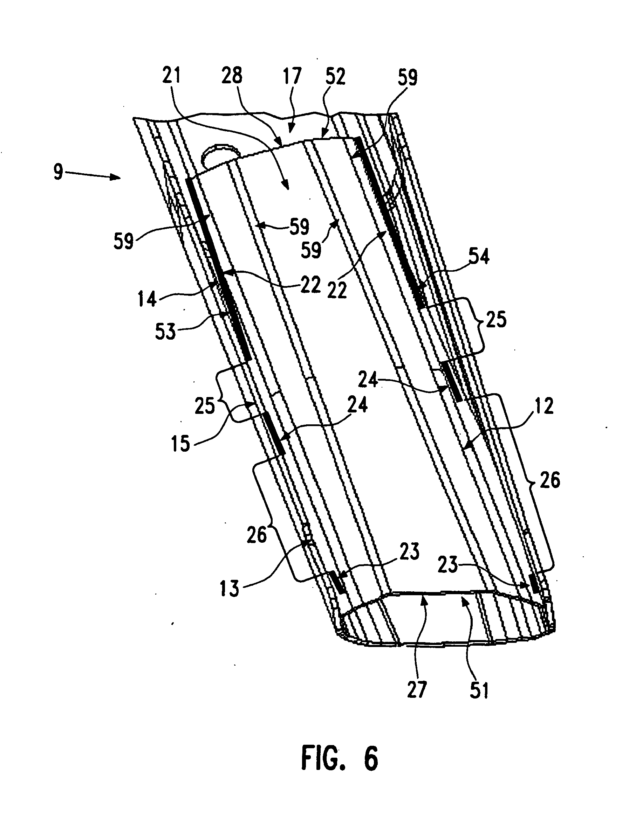

Das Zusatzprofil 12 verjüngt sich in Richtung zu der Tragstruktur 4. Dabei verringert sich die Höhe des Querschnitts des Zusatzprofils 12 in Richtung zu der Tragstruktur 4, wie aus Figur 4 hervorgeht. Die Breite des Zusatzprofils 12 verringert sich ebenfalls, wie aus Figur 6 hervorgeht.

Es ist auch möglich, dass das Zusatzprofil seine Breite und/oder Höhe über seine Länge hin im Wesentlichen beibehält. Außerdem ist es möglich, dass sich die Breite und/oder Höhe des Zusatzprofils in Richtung zu der Tragstruktur 4 vergrößert.

In Figur 4 sind auch Schweißverbindungen 55, 56, 57, 58 gezeigt, mit welchen der zweite Querschnittsabschnitt 10, das Zwischenprofil 12 und der erste Querschnittsabschnitt 9 an dem Querträger 3 befestigt sind. Ferner geht aus Figur 4 hervor, dass sich das Zwischenprofil 12 in Richtung zur Tragstruktur 4 bis hin in einen Bereich des Flansches 6 erstreckt. Das Zusatzprofil 12 ist an den Flansch 6 angeschweißt oder stützt sich dort frei ab, wie in Figur 4 dargestellt.

Es wird Bezug auf Figur 6 genommen. Das Zusatzprofil 12 ist tragstrukturseitig über eine größere Länge an dem Hauptprofil 8 befestigt, das heißt an dem ersten Querschnittsabschnitt 9, als stoßfängerseitig. In dieser Ausführungsform der Erfindung ist zwischen dem tragstrukturseitigen Bereich 14 und dem stoßfängerseitigen Bereich 13 des Zusatzprofils 12 noch ein Übergangsbereich 15 vorgesehen, in welchem das Zusatzprofil 12 über eine kürzere Länge an dem Hauptprofil 8 befestigt als im tragstrukturseitigen Bereich 14 und über eine größere Länge als im stoßfängerseitigen Bereich 13.

Mit dieser Auslegung der Befestigungen wird erreicht, dass sich das Zusatzprofil 12 sukzessive vom Querträger 3 her bis hin zur Tragstruktur 4 faltet. Dabei bleibt das an der Tragstruktur 4 anliegende Kraftniveau im Wesentlichen konstant.

Da das Zusatzprofil 12 im stoßfängerseitigen Bereich 13 am wenigstens am Hauptprofil 8, das heißt am ersten Querschnittsabschnitt 9, befestigt ist, kann es sich hier bei einem Verformen am freiesten falten. Damit ist hier der Verformungswiderstand bezüglich der Befestigung am geringsten. Im tragstrukturseitigen Bereich 14 ist der Verformungswiderstand bezüglich der Befestigung am höchstens, da das Zusatzprofil 12 hier über den größten Bereich am Hauptprofil fixiert ist. Im Übergangsbereich 15 liegt der Verformungswiderstand bezüglich der Befestigung zwischen dem des tragstrukturseitigen Bereiches 14 und dem des stoßfängerseitigen Bereiches 13.

Tragstrukturseitig sind beidseitig Schweißverbindungen 22 vorgesehen, mit welchen das Zusatzprofil 12 etwa über 30% bis 45% seiner Länge am Hauptprofil 8 befestigt ist, das heißt am ersten Querschnittsabschnitt 9, vorzugsweise über etwa 40% seiner Länge. Mit stoßfängerseitig beidseitig vorgesehenen Schweißverbindungen 23 ist das Zusatzprofil etwa über 3% bis 10% seiner Länge, z. B. über 5 bis 20 mm, am Hauptprofil 8 befestigt, das heißt am ersten Querschnittsprofil 9, vorzugsweise über etwa 5% seiner Länge, z. B. über 10 mm, wie in Figur 6 gezeigt ist.

Zwischen den tragstrukturseitigen Schweißverbindungen 22, 22 und den stoßfängerseitigen Schweißverbindungen 23, 23 sind beidseitig mittlere Schweißverbindungen 24, 24 vorgesehen, mit welchen das Zusatzprofil über etwa 5% bis 15% seiner Länge, z. B. über 15 bis 30 mm, am Hauptprofil 8 angebracht ist, vorzugsweise über etwa 10% seiner Länge, z. B. über 20 mm, wie in Figur 6 gezeigt ist.

Die Befestigungen, das heißt die Schweißverbindungen 22, 22; 23, 23; 24, 24, können kontinuierlich ausgeführt sein oder unterbrochen, z. B. als Punktschweißungen.

Die Befestigungen, das heißt die Schweißverbindungen 22, 22; 23, 23; 24, 24, erstrecken sich im Wesentlichen in Längsrichtung des Zusatzprofils 12. Hierdurch wird eine gute Faltenbildung erreicht und zu einem gleichbleibenden Niveau der an der Tragstruktur anliegenden Kraft beigetragen. Dabei verlaufen die Falten im Wesentlichen quer zur Längsrichtung des Zusatzprofils 12.

Zwischen den tragstrukturseitigen Schweißverbindungen 22, 22 und den mittleren Schweißverbindungen 24, 24 ist jeweils ein Abstand 25, 25 vorgesehen, welcher sich etwa über 5% bis 15% der Länge des Zwischenprofils 12 erstreckt, z. B. über 15 bis 30 mm, vorzugsweise über etwa 10% seiner Länge, z. B. über 20 mm. Zwischen den stoßfängerseitigen Schweißverbindungen 23, 23 und den mittleren Schweißverbindungen 24, 24 ist jeweils ein Abstand 26, 26 vorgesehen, welcher sich etwa über 30% bis 45% der Länge des Zusatzprofils 12 erstreckt, vorzugsweise über etwa 30% bis 40% der Länge, wie in Figur 6 gezeigt. Dabei ist der in Figur 6 linke Abstand 26 kürzer als der in dieser Figur rechte Abstand.

Es ist möglich, noch weitere Abstände und/oder Schweißverbindungen vorzusehen.

Zwischen den stoßfängerseitigen Schweißverbindungen 23, 23 und einer stoßfängerseitigen Endkante 27 des Zusatzprofils 12 ist ebenfalls ein Abstand vorgesehen, wie in der Figur gezeigt. Dagegen reichen die tragstrukturseitigen Schweißverbindungen 22, 22 bis an eine tragstrukturseitige Endkante 28 des Zwischenprofils 12 heran.

Im Bereich der genannten Abstände kann sich das Zwischenprofil beim Verformen bezüglich des ersten Querschnittsabschnitts 9 frei falten.

Bei der Wahl der Länge der Befestigungen, das heißt Schweißverbindungen, und der Abstände werden die Gesamtlänge der Energieabsorptionsvorrichtung, des Querschnitts der Energieabsorptionsvorrichtung, die Materialstärke, die Festigkeit des Materials und die zu übertragenden Kräfte berücksichtigt.

In einer erfindungsgemäßen Energieabsorptionsvorrichtung können mehrere Zusatzprofile vorgesehen sein. Diese werden vorzugsweise im Abstand voneinander angeordnet, um sich unabhängig voneinander verformen zu können. Trotz des Abstandes können die Zusatzprofile gemeinsam an dem Hauptprofil befestigt sein, beispielsweise mit übereinander angeordneten Seitenrändern gemeinsam mit dem Hauptprofil verschweißt sind.

Das Zusatzprofil 12 kann tragstrukturseitig eine größere Materialstärke haben als stoßfängerseitig. Die tragstrukturseitig größere Materialstärke verleiht dem Zusatzprofil 12 hier einen größeren Widerstand gegen Verformen als stoßfängerseitig. Dabei kann das Zusatzprofil 12 aus wenigstens zwei Materialstücken unterschiedlicher Materialstärke aufgebaut sein. Die Materialstücke können zusammengeschweißt sein.

Es ist auch möglich, das Zusatzprofil 12 mit einem Materialstück auszubilden, welches eine durch Walzen variierte Materialstärke aufweist. Die Materialstärke kann fließend variieren, wodurch sich der Widerstand gegen Verformen fließend ändert. Die Materialstärke kann beim Walzen flexibel variiert werden, insbesondere im Hinblick auf die Position bestimmter Materialstärken.

Das Material des Zusatzprofils 12 kann tragstrukturseitig eine höhere Festigkeit haben als stoßfängerseitig. Dies ist eine weitere Möglichkeit, das Zusatzprofil 12 tragstrukturseitig mit einer höheren Festigkeit gegen Verformen auszubilden.

Die genannten unterschiedlichen Materialstärken und Festigkeiten des Materials können durch Verwenden von sogenannten Tailored Blanks verwirklicht werden, sei es geschweißt oder gewalzt.

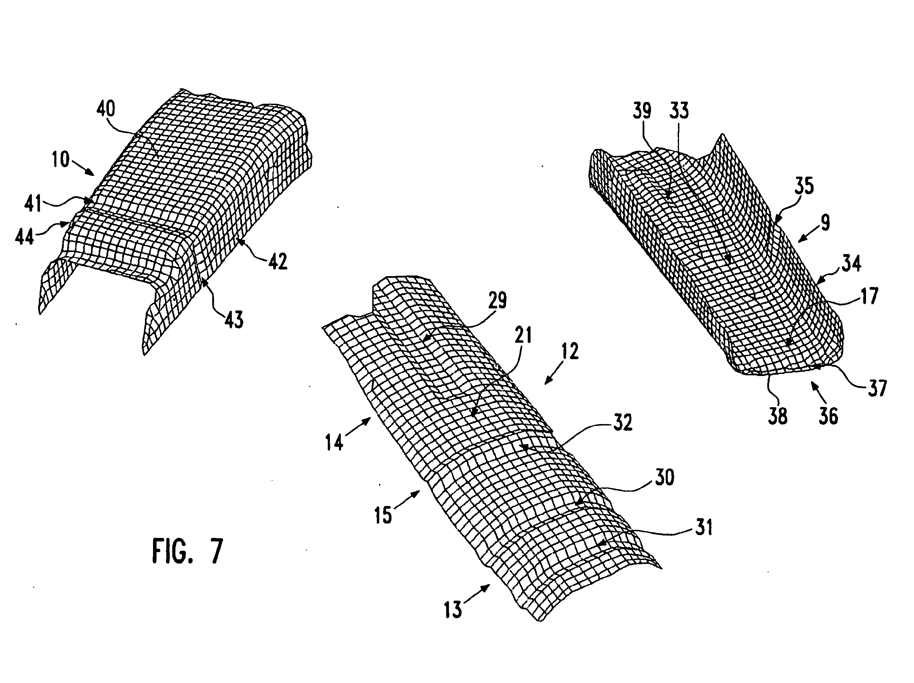

Wie in Figur 7 gezeigt ist, weist das Zusatzprofil 12 eine in seinem tragstrukturseitigen Bereich 14 ausgebildete, sich in etwa Längsrichtung erstreckende Längssicke 29 auf. Die Längssicke 29 ist im Profilrücken 21 ausgeformt und in Richtung zu einem Innenraum des Zusatzprofils 12 vertieft ausgebildet. Sie erhöht den Verformungswiderstand des Zusatzprofils 12 gegen ein Verformen in seiner Längsrichtung.

Im stoßfängerseitigen Bereich 13 weist das Zusatzprofil 12 zwei sich etwa quer zu seiner Längsrichtung erstreckende Quersicken 30, 31 auf. Die Quersicken 30, 31 sind in Richtung zum Innenraum des Zusatzprofils 12 vertieft ausgebildet. Es können auch drei oder vier Quersicken vorgesehen sein.

Im Übergangsbereich 15 weist das Zusatzprofil 12 eine sich etwa quer zu seiner Längsrichtung erstreckende Quersicke 32 auf, welche in dieser Ausführungsform weg vom Innenraum erhaben ausgebildet ist. Der Abstand dieser Quersicke 32 zur ihr benachbarten Quersicke 30 im stoßfängerseitigen Bereich 13 ist in dieser Ausführungsform der Erfindung größer als der Abstand der Quersicken 30, 31 im stoßfängerseitigen Bereich zueinander.

Die Quersicken 30, 31, 32 verringern den Verformungswiderstand des Zusatzprofils 12 gegen ein Verformen in seiner Längsrichtung. Dabei begünstigen sie ein gewolltes Falten des Zusatzprofils 12.

Mit den vorangehend beschriebenen Maßnahmen, welche auch teilweise oder einzeln zur Anwendung kommen können, wird das Zusatzprofil in Richtung zum Stoßfänger mit geringerem Verformungswiderstand ausgebildet als in Richtung zur Tragstruktur. Diese Maßnahmen können auch auf den ersten Querschnittsabschnitt 9 und/oder den zweiten Querschnittsabschnitt 10 des Hauptprofils 8 angewendet werden, und zwar auch teilweise oder einzeln. So kann der erste Querschnittsabschnitt 9 und/oder der zweite Querschnittsabschnitt 10 wie für das Zusatzprofil 12 beschrieben tragstrukturseitig eine größere Materialstärke haben als stoßfängerseitig, tragstrukturseitig ein Material höherer Festigkeit haben als stoßfängerseitig, wenigstens eine Längssicke aufweisen und/oder wenigstens eine Quersicke haben.

In Figur 7 sind der erste Querschnittsabschnitt 9 und der zweite Querschnittsabschnitt 10 beispielhaft mit Sicken gezeigt. Der erste Querschnittsabschnitt 9 hat in einem Bereich, welcher etwa zum Übergangsbereich 15 des Zusatzprofils 12 korrespondiert, sich etwa quer zu seiner Längsrichtung erstreckende Quersicken. Eine erste Quersicke 33 ist in den Profilboden 17 des ersten Querschnittsabschnitts 9 eingeformt und in dieser Ausführungsform hin zum Inneren des ersten Querschnittsabschnitts 9 erhaben ausgebildet. Benachbart hierzu ist in einer Seitenwand 34 des ersten Querschnittsabschnitts 9 eine zweite Quersicke 35 ausgeformt, welche in dieser Ausführungsform ebenfalls zum Inneren des ersten Querschnittsabschnitts 9 hin erhaben ausgebildet ist.

An seinem stoßfängerseitigen Ende 36 weist der erste Querschnittsabschnitt 9 eine sich etwa quer oder schräg zu seiner Längsrichtung erstreckende Sicke 37 auf, welche im Wesentlichen parallel zur Endkante 38 des stoßfängerseitigen Endes 36 verläuft. Diese Sicke ist in dieser Ausführungsform weg vom Inneren des ersten Querschnittsabschnitts 9 vertieft ausgebildet.

Der erste Querschnittsabschnitt 9 weist in einem Bereich, welcher zum tragstrukturseitigen Bereich 14 des Zusatzprofils 12 korrespondiert, eine in seinem Profilboden 17 ausgebildete, sich in Längsrichtung erstreckende Längssicke 39 auf. Die Längssicke ist in dieser Ausführungsform zum Inneren des ersten Querschnittsabschnitts 9 hin erhaben ausgebildet.

Der zweite Querschnittsabschnitt 10 weist eine in seinem Profilrücken 40 korrespondierend zur ersten Quersicke 33 des ersten Querschnittsabschnitts 9 ausgebildete erste Quersicke 41 auf, welche in dieser Ausführungsform in Richtung zu einem Inneren des zweiten Querschnittsabschnitts 10 hin erhaben ausgebildet ist. Benachbart zu dieser ersten Quersicke 41 ist in einer Seitenwand 42 des ersten Querschnittsabschnitts 10 eine zweite Quersicke 43 korrespondierend zur zweiten Quersicke 35 des ersten Querschnittsabschnitts 9 eingeformt.

Von der ersten Quersicke 41 des zweiten Querschnittsabschnitts 10 aus geht das Profil des Profilrückens 40 in eine entgegengesetzt zur ersten Quersicke ausgebauchte dritte Quersicke 44 über. Dabei entspricht die Längsposition, an welcher die erste Quersicke 41 in die dritte Quersicke 44 übergeht, in dieser Ausführungsform der Erfindung der Längsposition der in der Seitenwand 42 ausgebildeten zweiten Quersicke 43.

An einem stoßfängerseitigen Ende 45 ist im Profilrücken 40 des zweiten Querschnittsabschnitts 10 eine schräg oder etwa quer zur Längsrichtung des zweiten Querschnittsabschnitts 10 verlaufende Sicke 46 ausgebildet. Diese Sicke 46 ist in dieser Ausführungsform in Richtung zum Inneren des zweiten Querschnittsabschnitts 10 vertieft und befindet sich in einem Bereich nahe der dritten Quersicke 44 des zweiten Querschnittsabschnitts 10, wie in Figur 7 gezeigt ist.

Mit der Richtung der Auswölbung der Quersicken wird die Richtung bestimmt, in denen sich die betreffenden gewollten Falten ausbilden.

Vorangehend sind Maßnahmen beschrieben worden, mit welchen das Zwischenprofil und/oder der erste Querschnittsabschnitt und/oder der zweite Querschnittsabschnitt stoßfängerseitig mit einem geringeren Verformungswiderstand ausgebildet sind als tragstrukturseitig. Diese Maßnahmen tragen jeweils dazu bei, dass die auf die Tragstruktur 4 während des Verformens der erfindungsgemäßen Energieabsorptionsvorrichtung ausgeübte Kraft im Wesentlichen konstant bleibt.

Es ist auch möglich, den geringeren Verformungswiderstand tragstrukturseitig vorzusehen und den höheren Verformungswiderstand stoßfängerseitig.

Es besteht eine Asymmetrie zwischen dem Verformungswiderstand des ersten Querschnittsabschnitts und dem des zweiten Querschnittsabschnitts. Der erste Querschnittsabschnitt 9 des Hauptprofils ist insgesamt mit einem höheren Verformungswiderstand ausgebildet, insbesondere gegen ungewolltes Einknicken, als der zweite Querschnittsabschnitt 10. Im Gegensatz zum zweiten Querschnittsabschnitt 10 weist er beispielsweise die Längssicke 29 auf. Auch kann er eine größere Materialstärke und/oder Material größerer Festigkeit aufweisen als der zweite Querschnittsabschnitt 10 und/oder mehr Abkantungen aufweisen.

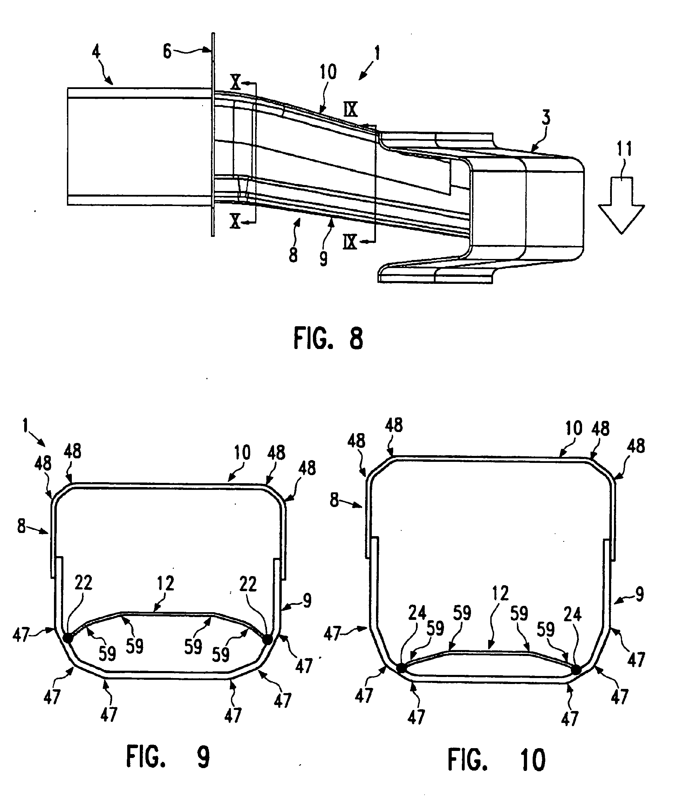

In den Figuren 9 und 10 sind Querschnittsansichten der Energieabsorptionsvorrichtung gemäß den Linien IX-IX und X-X der Seitenansicht von Figur 8 gezeigt. Hierin ist schematisch die größere Materialstärke des ersten Querschnittsabschnitts 9 gegenüber dem zweiten Querschnittsabschnitt 10 veranschaulicht.

Wie in den Figuren 9 und 10 gezeigt ist, sind die Querschnittsformen von erstem und zweitem Querschnittsabschnitt grundsätzlich verschieden. Das Querschnittsprofil des ersten Querschnittsabschnitts 9 weist mehr Abkantungen 47 auf als das zweite Querschnittsprofil, obwohl beide Querschnittsprofile einen im Wesentlichen U- oder C-förmigen Querschnitt haben. Im vorliegenden Ausführungsbeispiel weist der erste Querschnittsabschnitt 9 sechs Abkantungen 47 auf und der zweite Querschnittsabschnitt 10 weist vier Abkantungen 48 auf, das heißt der erste Querschnittsabschnitt 9 ist diesbezüglich steifer als der zweite Querschnittsabschnitt 10.

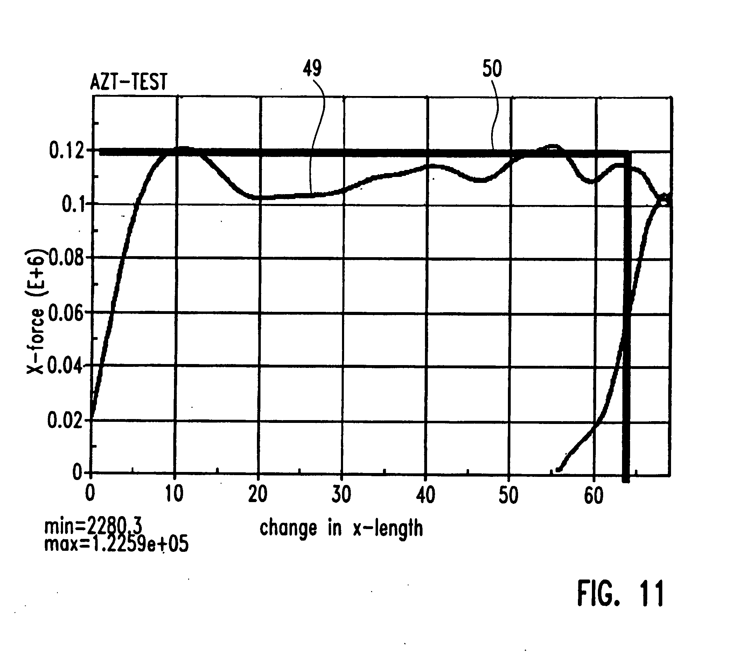

In Figur 11 ist ein Kraft-Weg-Diagramm der erfindungsgemäßen Energieabsorptionsvorrichtung 1 gezeigt. Neben dem Graphen 49, welcher das Messergebnis wiedergibt, ist mit geraden, kräftigen Linien ein Idealverlauf 50 eingetragen. Der Idealverlauf 50 entspricht 100% Energieabsorptionseffizienz. Wie der Darstellung zu entnehmen ist, wird mit der erfindungsgemäßen Energieabsorptionsvorrichtung 1 eine Energieabsorptionseffizienz von etwa 90% erreicht, das heißt die Energieabsorptionsvorrichtung absorbiert nichtaxiale Belastungen mit guter Effizienz. Dabei bleibt die an der Tragstruktur 4 anliegende Kraft im Wesentlichen auf gleichem Niveau.

In der vorangehend beschriebenen Ausführungsform ist der Stoßfänger 3 zur Tragstruktur 4, 5 des Fahrzeugs versetzt und die Energieabsorptionsvorrichtung 1, 2 überbrückt den Versatz 11. Es ist jedoch auch möglich, die vorliegenden Erfindung in einer Energieabsorptionsvorrichtung zu verwenden, welche sich im Wesentlichen in Längsrichtung der Tragstruktur 4, 5 des Fahrzeugs erstreckt. Mit einem Zusatzprofil wird ein seitlicher Querschnittsabschnitt des Hauptprofils stabilisiert. Auf diese Weise können winklig zur Längsachse des Fahrzeugs beziehungsweise zur Längsrichtung der Tragstruktur wirkende Unfallkräfte mit guter Effizienz von der Energieabsorptionsvorrichtung absorbiert werden. Beispielsweise ist dies für eine Winkligkeit von etwa 0 bis 40° gut möglich, insbesondere bis 30°. Trotz der Winkligkeit der Kräfte bleibt die Energieabsorptionsvorrichtung für das Absorbieren und Durchleiten von Kräften stabil.

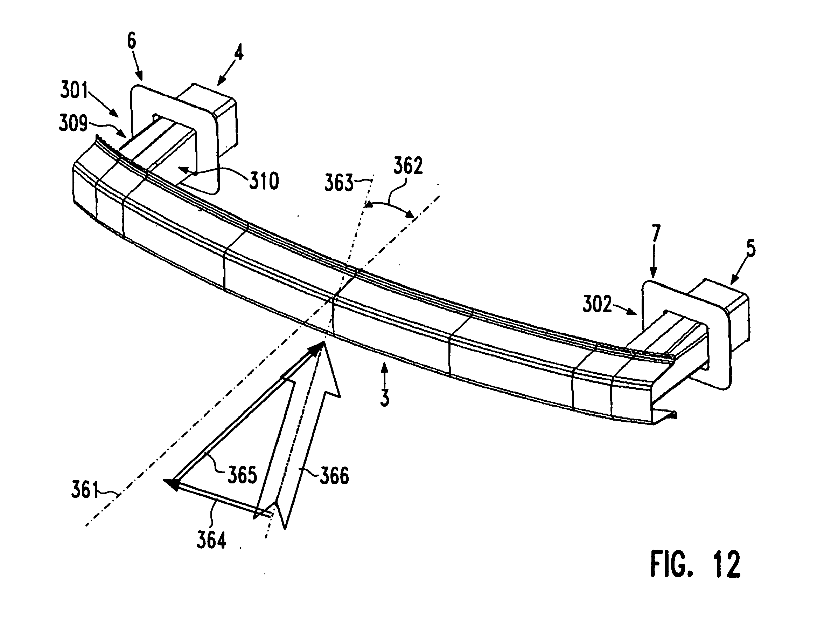

In den Figuren 12 bis 19 ist die zweite Ausführungsform der Erfindung gezeigt. Nachfolgend werden die wesentlichen Unterschiede zur ersten Ausführungsform der Erfindung erläutert.

In der zweiten Ausführungsform der Erfindung sind die Energieabsorptionsvorrichtungen 301, 302 sich im Wesentlichen in Längsrichtung der Tragstrukturen 4, 5, das heißt Längsträger, erstreckend vorgesehen. Somit sind die Energieabsorptionsvorrichtungen 301, 302 als Verlängerung der Tragstrukturen 4, 5 ausgebildet.

Die Energieabsorptionsvorrichtungen 301, 302 sind im Wesentlichen symmetrisch zueinander aufgebaut. Daher wird nachfolgend nur die in Figur 12 linke Energieabsorptionsvorrichtung 301 beschrieben.

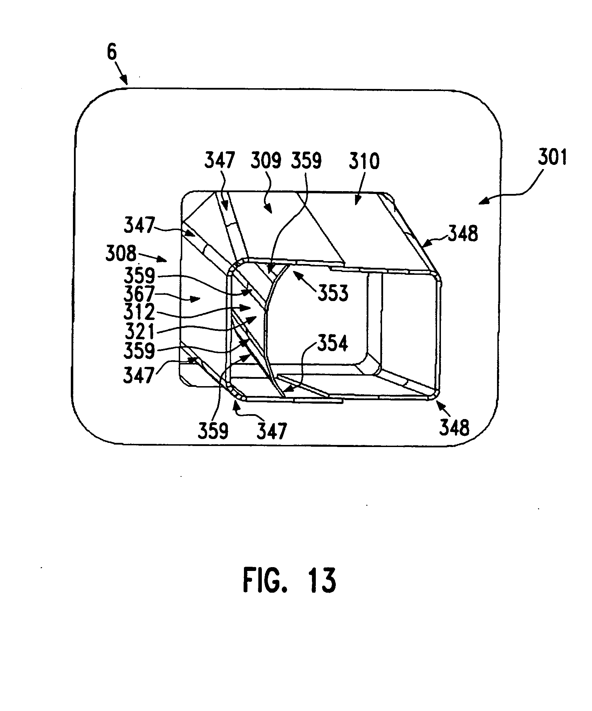

Wie aus den Figuren 12 und 13 hervorgeht, weist die Energieabsorptionsvorrichtung 301 zwei Querschnittsabschnitte 309, 310 auf, welche bezüglich des Fahrzeugs etwa horizontal seitlich angeordnet sind. Der erste Querschnittsabschnitt 309, das heißt der in Figur 13 linke Querschnittsabschnitt, ist bezüglich einer Längsmittelrichtung 361 des Fahrzeugs außen angeordnet. Der zweite Querschnittsabschnitt 310, das heißt der in Figur 13 rechte Querschnittsabschnitt, ist bezüglich der Längsmittelrichtung 361 des Fahrzeugs innen angeordnet.

In Figur 12 ist eine bezüglich der Längsmittelrichtung 361 des Fahrzugs winklig wirkende Unfallkraft 366 veranschaulicht, welche sich aus einer Querkomponente 364 und einer Längskomponente 365 zusammensetzt.

In der zweiten Ausführungsform der Erfindung ist der erste Querschnittsabschnitt 309 mit Hilfe eines in Figur 13 gezeigten Zusatzprofiles 312 gegen ein ungewolltes Einknicken durch die Querkomponente 364 der Unfallkraft 366 stabilisiert. Damit ist der in Richtung der Querkomponente 364 der Unfallkraft 366 vorangehende Querschnittsabschnitt der Energieabsorptionsvorrichtung stabilisiert.

In anderen Worten ist der in Versatzrichtung voraus angeordnete Querschnittsabschnitt durch das Zusatzprofil stabilisiert. In der zweiten Ausführungsform der Erfindung spiegelt sich der Versatz in der Querkomponente 364 der Unfallkraft 366 wider, wogegen in der ersten Ausführungsform der Erfindung ein baulicher Versatz vorhanden ist.

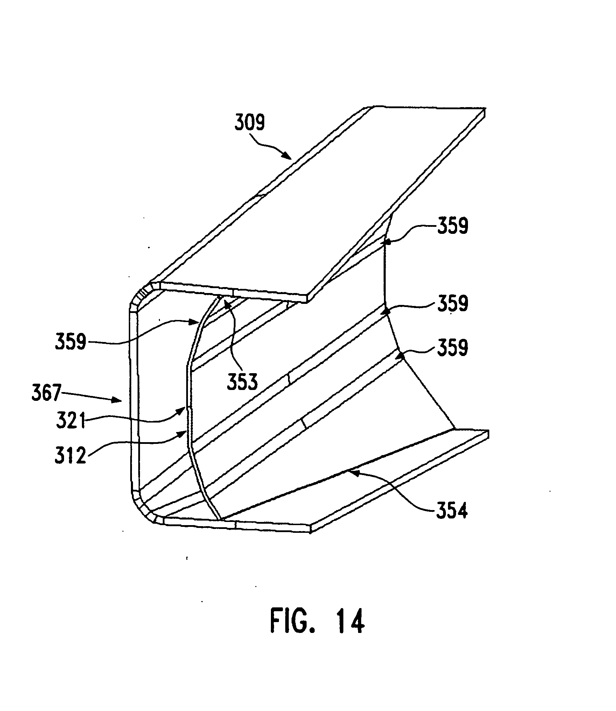

Aus den Figuren 13 und 14 geht hervor, wie das Zusatzprofil 312 ausgebildet und in dem aus erstem Querschnittsabschnitt 309 und zweitem Querschnittsabschnitt 310 gebildeten Hauptprofil 308 angeordnet ist. Das Zusatzprofil 312 verläuft in Längsrichtung der Energieabsorptionsvorrichtung 301 gesehen winklig zum ersten Querschnittsabschnitt 309, d.h. horizontal seitlich geneigt bezüglich der Längsrichtung der Tragstruktur 4. Dabei verlaufen die Seitenkanten 353, 354 des Zusatzprofils 312 stärker winklig in Bezug auf den Profilrücken 367 des ersten Querschnittsabschnitts 309 als ein Profilrücken 321 des Zusatzprofils 312. In Richtung der Tragstruktur 4 vergrößert sich der Abstand zwischen dem Profilrücken 367 des ersten Querschnittsabschnitt 309 und dem Zusatzprofil 312 insbesondere seinem Profilrücken 321. Damit sind das Zusatzprofil 312 und sein Profilrücken 321 in Richtung der Querkomponente 364 der erwarteten Unfallkraft 366 horizontal seitlich bezüglich des Fahrzeugs geneigt.

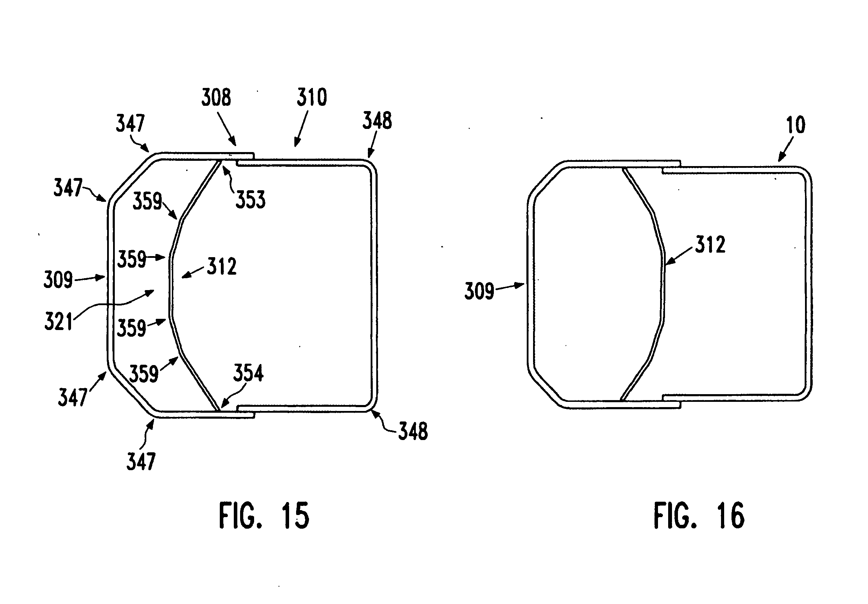

In Figur 15 ist der Querschnitt der Energieabsorptionsvorrichtung gezeigt, wie er etwa im Bereich ihrer Längsmitte ausgebildet ist. Das Zusatzprofil 312 bildet mit dem ersten Querschnittsabschnitt 309 eine im Wesentlichen konkav-konvexe Kontur aus. Wie aus Figur 16 hervorgeht, ist es genauso gut möglich, dass das Zusatzprofil 312 mit dem ersten Querschnittsabschnitt 309 eine im Wesentlichen konvexe Kontur ausbildet.

Die für die erste Ausführungsform der Erfindung beschriebenen Maßnahmen zum Ausgestalten des Verformungswiderstandes und/oder des Verformungsverhaltens der Energieabsorptionsvorrichtung und/oder ihrer Elemente sind analog in der zweiten Ausführungsform der Erfindung anwendbar. So hat beispielsweise auch in der zweiten Ausführungsform der Erfindung der erste Querschnittsabschnitt 309 einen höheren Verformungswiderstand als der zweite Querschnittsabschnitt 310. Damit ist der in Richtung der Querkomponente 364 der Unfallkraft 366 vorausgehende Querschnittsabschnitt zusätzlich zu der Verstärkung durch das Zusatzprofil 312 bereits gegen ungewolltes Einknicken stabilisiert.

Wie in der ersten Ausführungsform der Erfindung weist der erste Querschnittsabschnitt 309 mehr Abkantungen auf, als der zweite Querschnittsabschnitt 310. In dieser Ausführungsform der Erfindung hat der erste Querschnittsabschnitt 309 vier Abkantungen 347, wogegen der zweite Querschnittsabschnitt 310 zwei Abkantungen 348 aufweist. Im Unterschied zur ersten Ausführungsform der Erfindung laufen die Abkantungen des ersten Querschnittsabschnitts 309 in Richtung zur Tragstruktur 304 deutlich auseinander, wie in Figur 13 gezeigt ist.

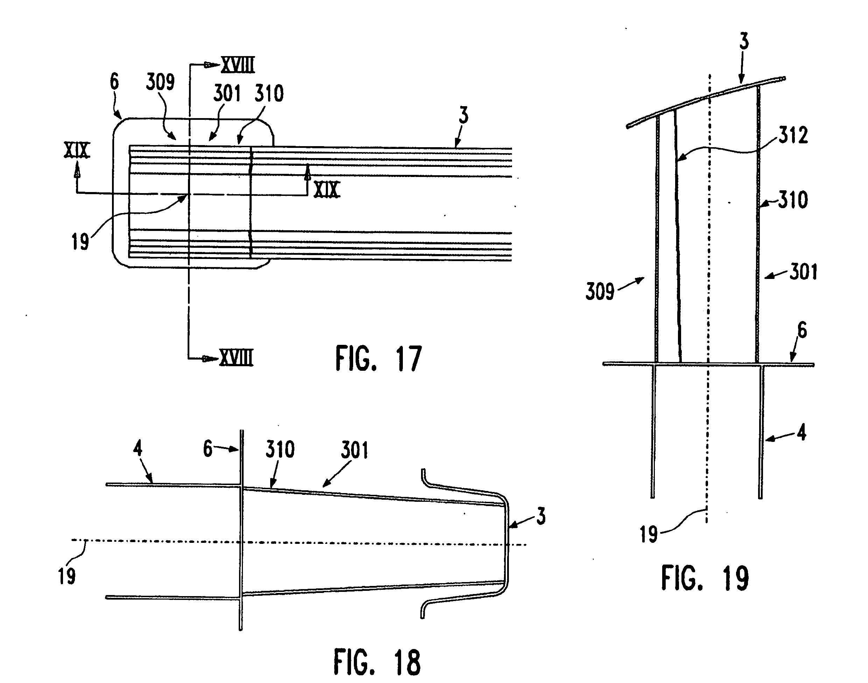

In Figur 18 ist eine schematische Schnittansicht der Energieabsorptionsvorrichtung 301 gemäß einer Linie XVIII-XVIII in Figur 17 gezeigt, wobei der Verlauf der Schnittflächen veranschaulicht ist. Wie aus Figur 18 hervorgeht, verjüngt sich die Energieabsorptionsvorrichtung hin zum Stoßfänger, das heißt des Querträger 3, in vertikaler Richtung.

Figur 19 ist eine Schnittansicht der Energieabsorptionsvorrichtung 301 gemäß einer Linie XIX-XIX in Figur 17, wobei der Verlauf der Schnittflächen veranschaulicht ist. Wie in Figur 19 gezeigt ist, behält die Energieabsorptionsvorrichtung 301 ihre horizontale Breite in Richtung zum Stoßfänger, das heißt zum Querträger 3, im Wesentlichen bei.

In der zweiten Ausführungsform der Erfindung sind der erste Querschnittsabschnitt und das Zusatzprofil 312 horizontal außenseitig vorgesehen. Es ist auch möglich, den ersten Querschnittsabschnitt 309 und/oder das Zusatzprofil 312 horizontal innenseitig vorzusehen. Damit kann die Energieabsorptionsvorrichtung insbesondere gegen ungewolltes Einknicken in Folge von Unfallkräften stabilisiert werden, bei denen die Querkomponente entgegengesetzt zu der in Figur 12 gezeigten Querkomponente 364 gerichtet ist.

Mit der Energieabsorptionsvorrichtung der zweiten Ausführungsform der Erfindung wird eine ähnlich gute Energieabsorptionseffizienz erreicht wie bei der ersten Ausführungsform, d.h. eine ähnlich gute Effizienz wie sie in Figur 11 gezeigt ist.

Zudem ist es möglich, die Ausgestaltungen der ersten und zweiten Ausführungsform miteinander zu kombinieren. Das heißt, es kann bei einem baulichen Versatz zwischen Tragstruktur und Querträger des Stoßfängers zusätzlich eine Stabilisierung gegen ein Einknicken in Folge von winklig zum Fahrzeug wirkenden Unfallkräften vorgesehen sein.

Die erfindungsgemäßen Energieabsorptionsvorrichtungen sind auch mit Stoßfängern ohne Querträger verwendbar.

## Patentansprüche

1. Energieabsorptionsvorrichtung (1, 2, 301, 302) zum Absorbieren von Energie durch Verformen, welche zwischen einer Tragstruktur (4, 5) eines Fahrzeugs und einem Stoßfänger (3) angeordnet ist, wobei die Energieabsorptionsvorrichtung ein im Querschnitt hohlkörperartiges, verformbares Hauptprofil (8, 308) hat, das den Stoßfänger (3) trägt, und an dem Hauptprofil (8, 308) im Querschnitt ein verformbares Zusatzprofil (12, 312) vorgesehen ist, welches einen Querschnittsabschnitt (9) des Hauptprofils (8) stabilisiert, wobei der Querschnittsabschnitt (9) in Versatzrichtung (11) voraus angeordnet ist,
**dadurch gekennzeichnet,**
**dass** der Stoßfänger (3) zur Tragstruktur (4, 5) versetzt angeordnet ist und die Energieabsorptionsvorrichtung den Versatz überbrückt, und dass das Zusatzprofil (12) bezüglich einer Längsrichtung der Tragstruktur (4) eine Neigung aufweist, welche zur Richtung des Versatzes (11) entgegengesetzt ist.

2. Energieabsorptionsvorrichtung nach wenigstens einem der vorhergehenden Ansprüche,
**dadurch gekennzeichnet,**
**dass** das Zusatzprofil (12, 312) einen im Wesentlichen gewölbten Querschnitt hat.

3. Energieabsorptionsvorrichtung nach Anspruch 2,
**dadurch gekennzeichnet,**
**dass** der Querschnitt des Zusatzprofils mit einem Bereich des Querschnitts des Hauptprofils (8) eine im Wesentlichen konvexe Kontur bildet.

4. Energieabsorptionsvorrichtung nach Anspruch 2 oder 3,
**dadurch gekennzeichnet,**
**dass** der Querschnitt des Zusatzprofils (12, 312) Abkantungen (59, 359) aufweist.

5. Energieabsorptionsvorrichtung nach wenigstens einem der vorhergehenden Ansprüche,
**dadurch gekennzeichnet,**
**dass** das Zusatzprofil (12, 312) im Inneren des Hauptprofils (8, 308) angeordnet ist.

6. Energieabsorptionsvorrichtung nach wenigstens einem der vorhergehenden Ansprüche,
**dadurch gekennzeichnet,**
**dass** sich das Zusatzprofil (12) in Richtung zu der Tragstruktur (4) des Fahrzeugs verjüngt.

7. Energieabsorptionsvorrichtung nach wenigstens einem der vorhergehenden Ansprüche,
**dadurch gekennzeichnet,**
**dass** sich das Zusatzprofil (312) in Richtung zum Stoßfänger (3) verjüngt.

8. Energieabsorptionsvorrichtung nach wenigstens einem der vorhergehenden Ansprüche,
**dadurch gekennzeichnet,**
**dass** das Zusatzprofil (12) einen Profilrücken (21) aufweist, welcher bezüglich der Längsrichtung der Tragstruktur (4) entgegengesetzt zur Richtung des Versatzes (11) geneigt ist.

9. Energieabsorptionsvorrichtung nach wenigstens einem der vorhergehenden Ansprüche,
**dadurch gekennzeichnet,**
**dass** das Zusatzprofil (312) bezüglich einer Längsrichtung der Tragstruktur (4) horizontal seitlich geneigt ist.

10. Energieabsorptionsvorrichtung nach wenigstens einem der vorhergehenden Ansprüche,
**dadurch gekennzeichnet,**
**dass** das Zusatzprofil (312) einen Profilrücken (321) aufweist, welcher bezüglich einer Längsrichtung der Tragstruktur (4) horizontal seitlich geneigt ist.

11. Energieabsorptionsvorrichtung nach wenigstens einem der vorhergehenden Ansprüche,
**dadurch gekennzeichnet,**
**dass** wenigstens zwei im Abstand zueinander verlaufende Zusatzprofile (12, 312) vorgesehen sind.

12. Energieabsorptionsvorrichtung nach wenigstens einem der vorhergehenden Ansprüche,
**dadurch gekennzeichnet,**
**dass** das Zusatzprofil (12, 312) in einem tragstrukturseitigen Bereich (13) über eine größere Länge an dem Hauptprofil (8, 308) befestigt ist als in einem stoßfängerseitigen Bereich (14).

13. Energieabsorptionsvorrichtung nach Anspruch 12,
**dadurch gekennzeichnet,**
**dass** ein Übergangsbereich (15) vorgesehen ist, in welchem das Zusatzprofil (12, 312) über eine kürzere Länge an dem Hauptprofil (8, 308) befestigt ist als im tragstrukturseitigen Bereich (13) und über eine größere Länge als im stoßfängerseitigen Bereich (14).

14. Energieabsorptionsvorrichtung nach wenigstens einem der vorhergehenden Ansprüche,
**dadurch gekennzeichnet,**
**dass** das Zusatzprofil (12, 312) tragstrukturseitig eine größere Materialstärke hat als stoßfängerseitig.

15. Energieabsorptionsvorrichtung nach Anspruch 14,
**dadurch gekennzeichnet,**
**dass** das Zusatzprofil (12, 312) wenigstens zwei Materialstücke unterschiedlicher Materialstärke aufweist.

16. Energieabsorptionsvorrichtung nach wenigstens einem der vorhergehenden Ansprüche,
**dadurch gekennzeichnet,**
**dass** das Material des Zusatzprofils (12, 312) tragstrukturseitig eine höhere Festigkeit hat als stoßfängerseitig.

17. Energieabsorptionsvorrichtung nach wenigstens einem der vorhergehenden Ansprüche,
**dadurch gekennzeichnet,**
**dass** das Zusatzprofil (12) wenigstens eine sich in seiner Längsrichtung erstreckende Längssicke (29) aufweist, vorzugsweise im Bereich nahe der Tragstruktur (4).

18. Energieabsorptionsvorrichtung nach wenigstens einem der vorhergehenden Ansprüche,
**dadurch gekennzeichnet,**
**dass** das Zusatzprofil (12) wenigstens eine sich quer zu seiner Längsrichtung erstreckende Quersicke (33, 35, 37) aufweist, vorzugsweise im Bereich nahe des Stoßfängers (3).

19. Energieabsorptionsvorrichtung nach wenigstens einem der vorhergehenden Ansprüche,
**dadurch gekennzeichnet,**
**dass** ein erster Querschnittsabschnitt (9) des Hauptprofils (8), welcher in Versatzrichtung (11) voraus angeordnet ist, einen höheren Verformungswiderstand hat als ein zweiter Querschnittsabschnitt (10) des Hauptprofils (8), welcher in Versatzrichtung (11) dem ersten Querschnittsabschnitt nachgeordnet ist.

20. Energieabsorptionsvorrichtung nach Anspruch 19,
**dadurch gekennzeichnet,**
**dass** der erste Querschnittsabschnitt (9) eine größere Materialstärke hat als der zweite Querschnittsabschnitt (10).

21. Energieabsorptionsvorrichtung nach Anspruch 19 oder 20,
**dadurch gekennzeichnet,**
**dass** das Material des ersten Querschnittsabschnitts (9) eine höhere Festigkeit hat als das Material des zweiten Querschnittsabschnitts (10).

22. Energieabsorptionsvorrichtung nach wenigstens einem der Ansprüche 19 bis 21,
**dadurch gekennzeichnet,**
**dass** am ersten Querschnittsabschnitt (9) mehr Abkantungen (47) vorgesehen sind, als am zweiten Querschnittsabschnitt (10).

## Claims

1. Energy absorbing device (1, 2, 301, 302) for absorbing energy by deformation, which is disposed between a support structure (4, 5) of a vehicle and a bumper (3), which energy absorbing device comprises a deformable main profile (8, 308) of a hollow body-type in cross-section which supports the bumper (3), and a deformable auxiliary profile (12, 312) which stabilises a cross-sectional portion (9) of the main profile (8) is provided on the main profile (8, 308) in its cross-section, wherein the cross-sectional portion (9) is disposed in an anterior position in an offset direction (11),
**characterised in that**
the bumper (3) is disposed offset from the support structure (4, 5) and the energy absorbing device bridges the offset, and the auxiliary profile (12) has an incline with respect to a longitudinal direction of the support structure (4) which incline is opposite the direction of the offset (11).

2. Energy absorbing device as claimed in at least one of the preceding claims,
**characterised in that**
the auxiliary profile (12, 312) has an essentially cambered cross-section.

3. Energy absorbing device as claimed in claim 2,
**characterised in that**
the cross-section of the auxiliary profile forms an essentially convex contour with a region of the cross-section of the main profile (8).

4. Energy absorbing device as claimed in claim 2 or 3,
**characterised in that**
the cross-section of the auxiliary profile (12, 312) has chamfers (59, 359).

5. Energy absorbing device as claimed in at least one of the preceding claims,
**characterised in that**
the auxiliary profile (12, 312) is disposed in the interior of the main profile (8, 308).

6. Energy absorbing device as claimed in at least one of the preceding claims,
**characterised in that**
the auxiliary profile (12) tapers in the direction towards the support structure (4) of the vehicle.

7. Energy absorbing device as claimed in at least one of the preceding claims,
**characterised in that**
the auxiliary profile (312) tapers in the direction towards the bumper (3).

8. Energy absorbing device as claimed in at least one of the preceding claims,
**characterised in that**
the auxiliary profile (312) has a profile back (21)
which is inclined relative to the longitudinal direction of the support structure (4) opposite the direction of the offset (11).

9. Energy absorbing device as claimed in at least one of the preceding claims,
**characterised in that**
the auxiliary profile (312) is laterally inclined horizontally relative to the longitudinal direction of the support structure (4).

10. Energy absorbing device as claimed in at least one of the preceding claims,
**characterised in that**
the auxiliary profile (312) has a profile back (321) which is laterally inclined horizontally relative to a longitudinal direction of the support structure (4) .

11. Energy absorbing device as claimed in at least one of the preceding claims,
**characterised in that**
at least two auxiliary profiles (12, 312) are provided, extending at a distance from one another.

12. Energy absorbing device as claimed in at least one of the preceding claims,
**characterised in that**
the auxiliary profile (12, 312) is secured to the main profile (8, 308) across a greater length in a support structure side region (13) than in a bumper side region (14).

13. Energy absorbing device as claimed in claim 12,
**characterised in that**
a transition region (15) is provided, in which the auxiliary profile (12, 312) is secured to the main profile (8, 308) across a shorter length than in the support structure side region (13) and across a greater length than in the bumper side region (14).

14. Energy absorbing device as claimed in at least one of the preceding claims,
**characterised in that**
the auxiliary profile (12, 312) has a greater material thickness on the support structure side than on the bumper side.

15. Energy absorbing device as claimed in claim 14,
**characterised in that**
the auxiliary profile (12, 312) comprises at least two material pieces of differing material thickness.

16. Energy absorbing device as claimed in at least one of the preceding claims,
**characterised in that**
the material of the auxiliary profile (12, 312) has a higher strength on the support structure side than on the bumper side.

17. Energy absorbing device as claimed in at least one of the preceding claims,
**characterised in that**
the auxiliary profile (12) has at least one longitudinal bead (29) extending in its longitudinal direction, preferably in the region close to the support structure (4).

18. Energy absorbing device as claimed in at least one of the preceding claims,
**characterised in that**
the auxiliary profile (12) has at least one transverse bead (33, 35, 37) extending transversely to its longitudinal direction, preferably in the region close to the bumper (3).

19. Energy absorbing device as claimed in at least one of the preceding claims,
**characterised in that**
a first cross-sectional portion (9) of the main profile (8) disposed in an anterior position in the offset direction (11) has a higher deformation resistance than a second cross-sectional portion (10) of the main profile (8) disposed after the first cross-sectional portion in the offset direction (11).

20. Energy absorbing device as claimed in claim 19,
**characterised in that**
the first cross-sectional portion (9) has a greater material thickness than the second cross-sectional portion (10).

21. Energy absorbing device as claimed in claim 19 or 20,
**characterised in that**
the material of the first cross-sectional portion (9) has a higher strength than the material of the second cross-sectional portion (10).

22. Energy absorbing device as claimed in at least one of claims 19 to 21,
**characterised in that**
more chamfers (47) are provided on the first cross-sectional portion (9) than on the second cross-sectional portion (10).

## Revendications

1. Dispositif d'absorption d'énergie (1, 2, 301, 302) pour absorber de l'énergie par déformation, qui est agencé entre une structure porteuse (4, 5) d'un véhicule et un pare-chocs (3), le dispositif d'absorption d'énergie ayant un profilé principal (8, 308) déformable, du type corps creux en section transversale, qui porte le pare-chocs (3), et sur le profilé principal (8, 308) est prévu, en section transversale, un profilé additionnel (12, 312) déformable, qui stabilise un secteur de section transversale (9) du profilé principal (8), le secteur de section transversale (9) étant agencé en premier à l'avant dans la direction de décalage (11), **caractérisé**
**en ce que** le pare-chocs (3) est agencé de manière décalée par rapport à la structure porteuse (4, 5), et le dispositif d'absorption d'énergie comble le décalage, et en ce que le profilé additionnel (12) présente, par rapport à une direction longitudinale de la structure porteuse (4), une inclinaison qui est opposée à la direction du décalage (11).

2. Dispositif d'absorption d'énergie selon l'une au moins des revendications précédentes,
**caractérisé**
**en ce que** le profilé additionnel (12, 312) présente une section transversale sensiblement bombée.

3. Dispositif d'absorption d'énergie selon la revendication 2,
**caractérisé**
**en ce que** la section transversale du profilé additionnel forme avec une zone de la section transversale du profilé principal (8), un contour sensiblement convexe.

4. Dispositif d'absorption d'énergie selon la revendication 2 ou la revendication 3,
**caractérisé**
**en ce que** la section transversale du profilé additionnel (12, 312) présente des pliages (59, 359).

5. Dispositif d'absorption d'énergie selon l'une au moins des revendications précédentes,
**caractérisé**
**en ce que** le profilé additionnel (12, 312) est agencé à l'intérieur du profilé principal (8, 308).

6. Dispositif d'absorption d'énergie selon l'une au moins des revendications précédentes,
**caractérisé**
**en ce que** le profilé additionnel (12) se rétrécit en direction de la structure porteuse (4) du véhicule.

7. Dispositif d'absorption d'énergie selon l'une au moins des revendications précédentes,
**caractérisé**
**en ce que** le profilé additionnel (312) se rétrécit en direction du pare-chocs (3).

8. Dispositif d'absorption d'énergie selon l'une au moins des revendications précédentes,
**caractérisé**
**en ce que** le profilé additionnel (12) présente un dos de profilé (21), qui, par rapport à la direction longitudinale de la structure porteuse (4), est incliné de manière opposée à la direction du décalage (11).

9. Dispositif d'absorption d'énergie selon l'une au moins des revendications précédentes,
**caractérisé**
**en ce que** le profilé additionnel (312) est incliné latéralement à l'horizontale par rapport à une direction longitudinale de la structure porteuse (4).

10. Dispositif d'absorption d'énergie selon l'une au moins des revendications précédentes,
**caractérisé**
**en ce que** le profilé additionnel (312) présente un dos de profilé (321), qui, par rapport à une direction longitudinale de la structure porteuse (4), est incliné latéralement à l'horizontale.

11. Dispositif d'absorption d'énergie selon l'une au moins des revendications précédentes,
**caractérisé**
**en ce que** sont prévus au moins deux profilés additionnels (12, 312) s'étendant à distance l'un de l'autre.

12. Dispositif d'absorption d'énergie selon l'une au moins des revendications précédentes,
**caractérisé**
**en ce que** le profilé additionnel (12, 312) est fixé au profilé principal (8, 308) sur une plus grande longueur dans une zone (13) située du côté de la structure
porteuse, que dans une zone (14) située du côté du pare-chocs.

13. Dispositif d'absorption d'énergie selon la revendication 12,
**caractérisé**
**en ce qu'**il est prévu une zone de transition (15) dans laquelle le profilé additionnel (12, 312) est fixé au profilé principal (8, 308) sur une longueur plus courte que dans la zone (13) située du côté de la structure porteuse, et sur une longueur plus grande que dans la zone (14) située du côté du pare-chocs.

14. Dispositif d'absorption d'énergie selon l'une au moins des revendications précédentes,
**caractérisé**
**en ce que** le profilé additionnel (12, 312) présente une épaisseur de matériau plus grande du côté de la structure porteuse que du côté du pare-chocs.

15. Dispositif d'absorption d'énergie selon la revendication 14,
**caractérisé**
**en ce que** le profilé additionnel (12, 312) présente au moins deux pièces de matériau d'épaisseur de matériau différente.

16. Dispositif d'absorption d'énergie selon l'une au moins des revendications précédentes,
**caractérisé**
**en ce que** le matériau du profilé additionnel (12, 312) possède une résistance plus élevée du côté la structure porteuse que du côté du pare-chocs.

17. Dispositif d'absorption d'énergie selon l'une au moins des revendications précédentes,
**caractérisé**
**en ce que** le profilé additionnel (12) présente au moins une moulure longitudinale (29) s'étendant dans la direction longitudinale de celui-ci, de préférence dans la zone proche de la structure porteuse (4).

18. Dispositif d'absorption d'énergie selon l'une au moins des revendications précédentes,
**caractérisé**
**en ce que** le profilé additionnel (12) présente au moins une moulure transversale (33, 35, 37) s'étendant transversalement à la direction longitudinale de celui-ci, de préférence dans la zone proche du pare-chocs (3).

19. Dispositif d'absorption d'énergie selon l'une au moins des revendications précédentes,
**caractérisé**
**en ce qu'**un premier secteur de section transversale (9) du profilé principal (8), qui est agencé en premier à l'avant dans la direction de décalage (11), possède une résistance à la déformation plus élevée qu'un deuxième secteur de section transversale (10) du profilé principal (8), qui est agencé après le premier secteur de section transversale en se référant à la direction de décalage (11).

20. Dispositif d'absorption d'énergie selon la revendication 19,
**caractérisé**
**en ce que** le premier secteur de section transversale (9) présente une épaisseur de matériau plus grande que le deuxième secteur de section transversale (10).

21. Dispositif d'absorption d'énergie selon la revendication 19 ou la revendication 20,
**caractérisé**
**en ce que** le matériau du premier secteur de section transversale (9) présente une résistance plus élevée que le matériau du deuxième secteur de section transversale (10).

22. Dispositif d'absorption d'énergie selon l'une au moins des revendications 19 à 21,
**caractérisé**
**en ce que** sur le premier secteur de section transversale (9) sont prévus davantage de pliages (47) que sur le deuxième secteur de section transversale (10).
